Europäisches Patentamt

European Patent Office

Office européen des brevets

(19)

(11) EP 0 931 768 B1

(12) EUROPEAN PATENT SPECIFICATION

(45) Date of publication and mention
of the grant of the patent:
**03.09.2003 Bulletin 2003/36**

(51) Int Cl.[7]: **C02F 3/12**, C02F 3/30,
C02F 3/34

(21) Application number: **99300516.4**

(22) Date of filing: **25.01.1999**

(54) **Process for the removal of ammonium from wastewater**

Verfahren zur Entfernung von Ammonium aus Abwasser

Procédé pour l'élimination de l'ammoniaque des eaux usées

(84) Designated Contracting States:
**AT BE CH DE DK ES FI FR IT LI LU NL PT SE**

(30) Priority: **23.01.1998 GB 9801526**

(43) Date of publication of application:
**28.07.1999 Bulletin 1999/30**

(73) Proprietors:
• **AW Creative Technologies Limited
Huntingdon, Cambridgeshire PE29 3NZ (GB)**
• **PURAC AB
221 05 Lund (SE)**

(72) Inventors:
• **Johansson, Per
239 32 Skanor (SE)**
• **Rosenwinkel, Karl-Heinz
D-30539 Hannover (DE)**
• **Seyfried, Carl Franz
D-30559 Hannover (DE)**

(74) Representative: **Perry, Robert Edward
GILL JENNINGS & EVERY
Broadgate House
7 Eldon Street
London EC2M 7LH (GB)**

(56) References cited:
DE-A- 19 617 331    FR-A- 2 390 988
US-A- 4 188 289    US-A- 5 228 997
US-A- 5 543 039

• PATENT ABSTRACTS OF JAPAN vol. 012, no. 491 (C-554), 21 December 1988 & JP 63 202382 A (TAKUMA SOGO KENKYUSHO:KK), 22 August 1988
• HEM L. ET AL: 'NITRIFICATION IN A MOVING BED BIOREACTOR' WATER RESEARCH vol. 28, no. 6, 1994, OXFORD, pages 1425 - 1433
• ZART D. ET AL: 'Neue Wege vom Ammonium zum Stickstoff', 1996, IN: LEMMER/GRIEBE/FLEMMING (EDITORS): ÖKOLOGIE DER ABWASSERORGANISMEN, SPRINGER VERLAG, BERLIN
• BINSWANGER S. ET AL: 'Simultane Nitrifikation/Denitrifikation von stark ammoniumbelasteten Abwässern ohne organische Kohlenstoffquellen' KORRESPONDENZ ABWASSER vol. 44, no. 9, 1997, HENEFF, pages 1573 - 1580
• HIPPEN A. ET AL: 'AEROBIC DEAMMONIFICATION: A NEW EXPERIENCE IN THE TREATMENT OF WASTEWATERS' WATER SCIENCE AND TECHNOLOGY vol. 35, no. 10, 1997, AMSTERDAM, pages 111 - 120
• BROCH-DUE A. ET AL: 'PILOT PLANT EXPERIENCE WITH AN AEROBIC MOVING BED BIOFILM REACTOR FOR TREATMENT OF NSSC WASTEWATER' WATER SCIENCE AND TECHNOLOGY vol. 29, no. 5-6, 1994, AMSTERDAM, pages 283 - 294

EP 0 931 768 B1

**Description**

Field of the Invention

This invention relates to a process for the biological treatment of waste water carried out by the aerobic deammonification in a moving bed biofilm reactor.

Background to the Invention

In wastewater treatment there is often a requirement to treat process streams containing very high concentrations of ammonia. For example, in sludge digestion a liquor is produced which can contain typically 500 - 1000 mg/l Ammonia. Usually the liquor is returned to the normal process stream of the treatment works. However, when the liquor comprises 10 to 20% of the ammonia load to the works, the high ammonia levels may cause the final effluent quality of the whole works to be affected.

To treat these high concentrations of ammonia a number of processes have been proposed based on biological and physical processes. These all however suffer from the disadvantage of requiring large quantities of chemical, and/or high power inputs.

Current biological processes use the processes of nitrification and denitrification. Nitrification is first carried out, whereby ammonia is oxidised first to nitrite, and then further oxidised to nitrate. This process consumes alkalinity, and in order for liquors to be completed nitrified, it is necessary to add alkalinity, with a resultant consumption of expensive chemicals. In addition, the biological oxidation requires the input of oxygen normally by air blown into the process which consumes energy. The second stage of treatment requires the denitrification of the nitrate in anoxic conditions using bacteria which can utilise the oxygen in nitrate to oxidise carbon. This recovers some alkalinity and oxygen, but requires the presence of a suitable carbon source which is often limited in the liquors in question.

Because nitrification and denitrification require different operating conditions, it is necessary to carry out these reactions in separate reactors.

An alternative process utilises deammonification whereby the ammonia is converted to nitrite and then directly to nitrogen using a hydrogen pathway. This can be viewed as aerobic denitrification. This saves energy (the nitrogen is not oxidised to nitrate) and alkalinity (because less alkalinity is required, and alkalinity utilised is recovered by the conversion of nitrite to nitrogen). These various processes are summarized below.

1)

$$\text{Nitritation: } NH_4^+ + 1.5\,O_2 \rightarrow NO_2^- + 2H^+ + H_2O$$

2)

$$\text{Nitratation: } NO_2^- + 0.5\,O_2 \rightarrow NO_3^-$$

3)

$$\text{Denitratation: } 2NO_3^- + 10H^+ + 10e^- \rightarrow 20H^- + 4H_2O + N_2$$

4)

$$\text{Denitritation: } 2NO_2^- + 6H^+ + 6e^- \rightarrow 20H^- + 2H_2O + N_2$$

Nitrification/denitrification is a combination of steps 1, 2 and 3, that is:

$$2NH_4^+ + 4O_2^- + 10e^- + 6H^+ \rightarrow 20H^- + 6H_2O + N_2$$

However, aerobic deammonification utilises the denitritation step 4, in combination with step 1, to give an overall reaction formula of:

$$2NH_4^+ + 3O_2^- + 6e^- + 2H^+ \rightarrow 2OH^- + 4H_2O + N_2$$

By comparison of these two methods, it can clearly be seen that aerobic deammonification is a more effective method of converting ammonium ions to nitrogen.

The process of deammonification requires the use of microorganisms able to carry out aerobic denitrification. Examples of these organisms include *Nitrosomonas europea, Nitrosomonas eutropha* and *Thiosphera pantopha*. The process further requires a limited supply of oxygen.

However, previous attempts to use this process have only achieved limited conversion of ammonia due to irregular loading of aerobic denitrificants in the system, and the growth of microorganisms which carry out aerobic nitrification or anoxic denitrification.

Hem et al, Water Res. 28(6): 1425-1433 (1994), discloses nitrification in a moving bed biofilm reactor under limited oxgen conditons, of between 1 and 15 g $O_2$ m$^{-3}$.

Summary of the Invention

The present invention is based on the realisation that a moving bed biofilm reactor (MBBR) may be used as a system to promote deammonification. In this system, a population of specialised bacteria, having the capability of oxidising ammonium ions, can be developed and retained on the medium used in the reactor. In addition, the biofilm thickness can be controlled and this prevents the development of anaerobic or anoxic conditions typical in thick biofilms. Therefore the growth of microorganisms which may disrupt the deammonification process is minimized.

In addition, a high surface area is available per cubic meter of reactor which means that the overall size of the reactor can be minimised.

The present invention provides an efficient system for the removal of ammonia from waste waters without the need for nitrification and subsequent carbon-driven denitrification.

Description of the Invention

The apparatus of this invention is essentially conventional, in wastewater treatment. In a moving bed biofilm reactor, the biomass grows on small carrier elements that move along with the water in the reactor. The movement is caused by aeration or mixing. The reactor provides high specific biofilm surface, insignificant headloss through this system, and no need for backwashing or recycling the biomass. Preferably, the MBBR comprises a tank which, in addition to an inlet and an outlet for the sewage under treatment, comprises an inlet for oxygen (or air containing oxygen) to be introduced under pressure, Within the reactor, a buoyant medium is present, providing surfaces on which microorganism growth can occur; agitation of the elements controls biomass which allows good oxygen penetration. The medium preferably comprises discrete pieces of, say, plastics material, which preferably include an internal surface, such that solids are not removed by attrition between the pieces. An especially suitable material of this type is known as "Kaldnes" medium, and is described in detail in EP-A-0575314. Each carrier element of this medium is a plastic cylinder with cross-shaped dividers on its inside and longitudinal fins on the outside. The plastic cylinders are, for example, 9 mm in diameter and 7 mm long. They may be made from high density polyethylene, and have a specific weight between 0.92 and 0.96 kg/m$^3$. As the carrier elements are lighter than water, the mixing is provided by air blown into the reactor.

The effective (i.e. inner) surface area of the elements is, for example, 500 m$^2$/m$^3$ in bulk. The total surface area for a Kaldnes element is much higher but, because of abrasion between the carrier elements when mixed, the bacterial growth is much weaker on the outer surfaces and is therefore not taken into account. The maximum percentage of carrier elements to an empty reactor volume is 70% which corresponds to an effective surface area of 350 m$^2$/m$^3$ of reactor for the example. In the case where the reactor is filled to 50% this gives an effective biofilm area of 250 m$^2$/m$^3$ for the example.

The skilled man will be able to determine appropriate loading of the MBBR, according to the desired sludge properties. Depending on circumstances, loading may be changed. For example, it has been found that a system of this invention can work satisfactorily with an ammonia load of between 1-10g N per m$^2$/day, preferably 4-5g N per m$^2$/day. The average pH is about 8, with the average concentration of dissolved oxygen from 0.2-5 mg/l, preferably 0.5-1.5 mg/l and an average temperature of between 25-35°C.

Deammonification may be carried out in one reactor or in several in series, in which case a recycle of treated effluent may be required to control the concentration of the influent ammonia.

An example of the invention is described below.

An aerobic deammonification laboratory-scale-plant includes a series of MBBRs and a sedimentation tank which can optionally be used for secondary or intermediate clarification. Each reactor comprises a cylindrical perspex container with a double jacket to maintain the temperature at 25°C. The diameter of each reactor is 0.28m, the height is 0.8m and the maximum liquid volume is 0.04m$^2$. All the reactors can be completely sealed off. The influent enters in the lower quarter and the effluent exits at a height of 0.65m. Gas distribution is via a ring-shaped membrane aeration device implemented at the bottom of the reactor; it is possible to choose between feeding either air or any given oxygen-helium mixture into the reactor.

The MBBRs are partly filled with Kaldnes; this medium has a density that is close to, but below, the density of water. The dimensions of the cylindrical pieces of this medium are: diameter 9.9mm, height 8.1mm, wall thickness 0.66mm. The filling proportion amounts to 20%. In order to estimate the additional surface available for the respective processes, only the insides of the cylinders are considered for the calculation. The active growing surface is 500m$^2$/m$^3$ of the material. As the filling proportion is 20%, the active surface is, therefore, 100m$^2$/m$^3$. The circulation of the medium inside the reactors is created by aeration, or by mechanical mixers if aeration is insufficient to provide circulation. The average temperature in the reactors is 27.5°C.

The results show that stable nitrogen losses can be achieved under conditions of: a pH value of 7.5 to 8.0, an oxygen concentration of 0.7 to 1.0mg/l, and a high surface load of 7-15g N per m$^2$/day. Total nitrogen loss of 68% is observed.

**Claims**

1. A process for the removal of ammonia from wastewater, which comprises the step of passing the wastewater through a moving bed biofilm reactor under limited oxygen conditions and in the presence of ammonium ion-oxidising organisms **characterised in that**, the wastewater in the reactor comprises a dissolved oxygen concentration of 0.2 up to less than 1 mg/l.

2. A process according to claim 1, wherein the wastewater undergoes nitritation prior to its addition to the moving bed biofilm reactor.

3. A process according to claim 2, wherein the nitritation takes place in a moving bed biofilm reactor.

4. A process according to any preceding claim, wherein the or each reactor comprises discrete pieces of plastics material each'having an internal surface.

5. A process according to any preceding claim, wherein the organisms are selected from *Nitrosomonas europea, Nitrosomonas eutropha* and *Thiosphera pantopha*.

**Patentansprüche**

1. Verfahren zur Entfernung von Ammoniak aus Abwasser, das den Schritt umfaßt des Durchführens des Abwassers durch einen Bewegtbett-Biofilmreaktor unter eingeschränkten Sauerstoffbedingungen und in Anwesenheit von Ammoniumionen-oxidierenden Organismen, **dadurch gekennzeichnet, daß** das Abwasser in dem Reaktor eine Konzentration gelösten Sauerstoffs von 0,2 bis zu weniger als 1 mg/ml, umfaßt.

2. Verfahren nach Anspruch 1, bei welchem das Abwasser vor seiner Zufuhr zu dem Bewegtbett-Biofilmreaktor einer Nitrierung unterzogen wird.

3. Verfahren nach Anspruch 2, bei welchem die Nitrierung in einem Bewegtbett-Biofilmreaktor stattfindet.

4. Verfahren nach einem der vorstehenden Ansprüche, bei welchem der oder jeder Reaktor diskrete Teile aus Kunststoffmaterial umfaßt, von denen jedes eine innere Oberfläche hat.

5. Verfahren nach einem der vorstehenden Ansprüche, bei welchem die Organismen ausgewählt sind aus Nitrosomonas europea, Nitrosomonas eutropha und Thiosphera pantopha.

**Revendications**

1. Procédé pour éliminer l'ammoniaque des eaux usées, qui comprend l'étape consistant à faire passer les eaux usées à travers un réacteur à film biologique à lit mobile dans des conditions limitées en oxygène et en présence d'organismes oxydant les ions ammonium, **caractérisé en ce que** les eaux usées dans le réacteur comprennent une concentration d'oxygène dissous de 0,2 à moins d'1 mg par litre.

2. Procédé suivant la revendication 1, dans lequel les eaux usées subissent une nitritation avant leur introduction dans le réacteur à film biologique à lit mobile.

3. Procédé suivant la revendication 2, dans lequel la nitritation s'effectue dans un réacteur à film biologique à lit mobile.

4. Procédé suivant l'une quelconque des revendications précédentes, dans lequel chaque réacteur comprend des pièces distinctes de matière plastique, chacune ayant une surface interne.

5. Procédé suivant l'une quelconque des revendications précédentes, dans lequel les organismes sont choisis entre *Nitrosomonas europea, Nitrosomonas eutropha et Thiosphera pantopha*.